# EUROPEAN PATENT APPLICATION

(11) **EP 4 763 439 A1**
(43) Date of publication of application: **24.06.2026**
(21) Application number: 25226015.3
(22) Date of filing: 19.12.2025
(51) Int. Cl.: B25J 9/16

(54) **SYSTEM AND METHOD FOR AUTONOMOUS HEALTH MONITORING OF A ROBOTIC SYSTEM**

(30) Priority: 20.12.2024 US 202463736716 P
(71) Applicant: MacDonald, Dettwiler and Associates Inc., Brampton, Ontario L6Y 6K7 (CA)
(72) Inventor: NIKSIRAT, Parna, Brampton, L6Y 6K7 (CA); EL SAMID, Nader Abu, Brampton, L6Y 6K7 (CA); PANKOV, Taras, Brampton, L6Y 6K7 (CA); NAIK, Malav, Brampton, L6Y 6K7 (CA)
(74) Representative: Mewburn Ellis LLP

(57) **Abstract**

Systems and methods for autonomous health monitoring of an autonomous machine are provided. The method includes: performing autonomous tasks with the autonomous machine; using a subsystem of the autonomous machine during performance of the autonomous tasks; collecting data for a plurality of subsystem attributes during use of the subsystem; analyzing the data using a predictive algorithm to detect an off-nominal health signature, wherein the off-nominal health signature is based on the data for a subset of the subsystem attributes; and outputting an off-nominal health flag based on the off-nominal health signature.

## Description

### Technical Field

The following relates generally to robotic systems, and more particularly to space robotics systems.

### Introduction

Current approaches to detecting and handling off nominal behaviour of space robotics systems are implemented on ground using ground engineers to analyze subsets of flight telemetry. Only functional or low-level faults are handled in the flight segment by the system level fault detection and recovery. It is desired to be able to assess the health of a space robotics system to identify issues early so that future faults can be mitigated and the lifetime of the space robotics system and its subsystems prolonged. Further, it is desired for this health assessment to be performed without the need to downlink data to ground and without human analysis of telemetry.

Accordingly, there is a need for an improved system and method for monitoring health of robotic systems in space that overcomes at least some of the disadvantages of existing systems and methods.

### Summary

A method of autonomous health monitoring of an autonomous machine is provided. The method includes: performing autonomous tasks with the autonomous machine; using a subsystem of the autonomous machine during performance of the autonomous tasks; collecting data for a plurality of subsystem attributes during use of the subsystem; analyzing the data using a predictive algorithm to detect an off-nominal health signature, wherein the off-nominal health signature is based on the data for a subset of the subsystem attributes; and outputting an off-nominal health flag based on the off-nominal health signature.

In an embodiment, the method further includes determining, by a response recommendation module, a set of corrective actions to adjust behaviour of the autonomous machine to mitigate degradation of the subsystem.

In an embodiment, the set of corrective actions includes modifying an operating parameter of the subsystem in a future autonomous task.

In an embodiment, modifying the operating parameter includes using another subsystem instead of the subsystem.

In an embodiment, determining the set of corrective actions includes executing a contingency script comprising a set of scripted actions detailing how to respond to the off-nominal health flag.

In an embodiment, the contingency script is retrieved from a script database based on information contained in the off-nominal health flag.

In an embodiment, the method further includes, in response to the off-nominal health flag, using an autonomous task planner to replan a future autonomous task to achieve a same goal with an adjusted operating parameter of the subsystem.

In an embodiment, the predictive algorithm uses an expert system.

In an embodiment, the predictive algorithm uses a model-based system, and wherein the model-based system uses a parity equation, a Kalman filter, a particle filter, or a Bayesian network.

In an embodiment, the predictive algorithm uses a statistical modelling algorithm.

In an embodiment, the statistical modelling algorithm is Multivariate Gaussian, Parzen density estimation, Mixture model approach, or Principal Component Analysis (PCA).

In an embodiment, the predictive algorithm uses a machine learning algorithm.

In an embodiment, the machine learning algorithm is a Support Vector Machine, k Nearest Neighbour (kNN), K-Mean, Local Outlier Factor, Regression, or Gaussian Process Regression.

In an embodiment, wherein the predictive algorithm uses a deep learning algorithm.

In an embodiment, the deep learning algorithm is an artificial neural network, an autoencoder, or a Long short-term memory (LSTM).

In an embodiment, the predictive algorithm includes a deep learning trained algorithm and an expert system predictive algorithm that run simultaneously.

In an embodiment, the off-nominal health flag includes a predicted lifetime for the subsystem.

In an embodiment, the off-nominal health signature is a single off-nominal behaviour event.

In an embodiment, the off-nominal health signature is sustained off-nominal behaviour across multiple autonomous tasks.

In an embodiment, the autonomous machine is a robotic device and the autonomous task is a robotic task.

In an embodiment, the data is telemetry.

A system for autonomous health monitoring of an autonomous machine is also provided. The system includes: an autonomous machine configured to perform autonomous tasks, the autonomous machine comprising a subsystem that is operative during performance of the autonomous tasks; a plurality of sensors operative during performance of the autonomous tasks to collect data for a plurality of subsystem attributes during use of the subsystem; a computer system comprising: a data storage device for storing data including the data; and one or more processors in communication with the data storage device and configured to: analyze the data using a predictive algorithm to detect an off-nominal health signature, wherein the off-nominal health signature is based on the data for a subset of the subsystem attributes; and output an off-nominal health flag based on the off-nominal health signature.

In an embodiment, the one or more processors are configured to determine, by a response recommendation module, a set of corrective actions to adjust behaviour of the autonomous machine to mitigate degradation of the subsystem.

In an embodiment, the set of corrective actions includes modifying an operating parameter of the subsystem in a future autonomous task.

In an embodiment, modifying the operating parameter includes using another subsystem instead of the subsystem.

In an embodiment, determining the set of corrective actions includes executing a contingency script comprising a set of scripted actions detailing how to respond to the off-nominal health flag.

In an embodiment, the contingency script is retrieved from a script database stored in the data storage device based on information contained in the off-nominal health flag.

In an embodiment, the one or more processors is further configured to, in response to the off-nominal health flag, use an autonomous task planner to replan a future autonomous task to achieve a same goal with an adjusted operating parameter of the subsystem.

In an embodiment, the predictive algorithm uses an expert system.

In an embodiment, the predictive algorithm uses a model-based system, and wherein the model-based system uses a parity equation, a Kalman filter, a particle filter, or a Bayesian network.

In an embodiment, the predictive algorithm uses a statistical modelling algorithm.

In an embodiment, the statistical modelling algorithm is Multivariate Gaussian, Parzen density estimation, Mixture model approach, or Principal Component Analysis (PCA).

In an embodiment, the predictive algorithm uses a machine learning algorithm.

In an embodiment, the machine learning algorithm is a Support Vector Machine, k Nearest Neighbour (kNN), K-Mean, Local Outlier Factor, Regression, or Gaussian Process Regression.

In an embodiment, the predictive algorithm uses a deep learning algorithm.

In an embodiment, the deep learning algorithm is an artificial neural network, an autoencoder, or a Long short-term memory (LSTM).

In an embodiment, the predictive algorithm includes a deep learning trained algorithm and an expert system predictive algorithm that run simultaneously.

In an embodiment, the off-nominal health flag includes a predicted lifetime for the subsystem.

In an embodiment, the off-nominal health signature is a single off-nominal behaviour event.

In an embodiment, the off-nominal health signature is sustained off-nominal behaviour across multiple autonomous tasks.

In an embodiment, the autonomous machine is a robotic device and the autonomous task is a robotic task.

In an embodiment, the data is telemetry.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a schematic diagram of a system for autonomous health monitoring of a autonomous machine in a space robotics system, according to an embodiment;
Figure 2 is a block diagram of a computer system for autonomous health monitoring of the robotic arm of Figure 1, according to an embodiment; and
Figure 3 is a flowchart of a method of autonomous health monitoring using the system of Figure 1, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to space robotic systems, and more particularly to autonomous health monitoring of a space robotic system.

The present disclosure provides systems and methods for autonomous health monitoring of a remotely operated device, such as a space robotic system, where the device is configured to perform tasks autonomously, semi-autonomously, or non-autonomously. The remotely operated device may be, for example, an autonomous machine or robotic device.

Those skilled in the art will appreciate that, although the embodiments described in the present disclosure are set forth in the context of robotic systems, the disclosed systems and methods for autonomous anomaly resolution are not so limited. The principles and techniques described herein may be implemented in connection with any remotely operated or controllable platform or device, including, without limitation, robotic systems, satellites, planetary rovers, unmanned aerial or marine vehicles, remote-operated industrial machinery, or other systems capable of receiving and executing remote instructions. Accordingly, the scope of the present disclosure should not be construed as being limited to robotic systems alone.

As used herein, the term "remotely operated device" or "remotely operated system" encompasses systems such as satellites, planetary rovers, unmanned aerial vehicles, robotic systems, industrial machinery, or other platforms that are capable of receiving and executing commands from a remote operator, whether or not the device or system further includes autonomous functionality. For example, while example embodiments of the present disclosure describe autonomous robots/machines performing autonomous operations, the autonomous anomaly resolution system may also be effectively utilized for resolving anomalies in non-autonomous (or semi-autonomous) remotely operated devices as well.

Those skilled in the art will appreciate that references to "telemetry" within the present disclosure are provided by way of example and not limitation. The disclosed autonomous health monitoring systems and methods may likewise operate on, process, or transmit other forms of data, including, without limitation, sensor data, operational data, control commands, diagnostic information, algorithmic outputs, error or fault reports, software bug data, or any other information capable of being generated by a device or software system and communicated to a local or remote operator, processor, or control system. This includes such data generated during operation of a remotely operated device, whether such device operates autonomously, semi-autonomously, or non-autonomously. Accordingly, the scope of the present disclosure should not be construed as being limited to telemetry data alone.

It should be noted that while embodiments of the present disclosure have been described in the context of a robotic arm, this is one nonlimiting example of a robotic system that may use the systems and methods for autonomous health monitoring described herein. The systems and methods for autonomous health monitoring may be applied to any robotics system (e.g., a rover).

It should further be noted that the autonomous health monitoring algorithms and computations used by the systems and methods of the present disclosure may be, in various embodiments, executed in real-time and/or non-real-time. For example, in embodiments of the present disclosure, the health monitoring algorithm(s) may execute as an operation by the robotic device is taking place (real-time with respect to the operation) where inference operations are conducted on an incomplete dataset (since the operation is not complete). This can be compared to the same algorithm(s) that execute their inference operations immediately after the operation is complete (this is non-real-time with respect to the operation taking place). Depending on when the algorithm is executed (during vs. after the operation), the result can provide varying degrees/depth of inference results.

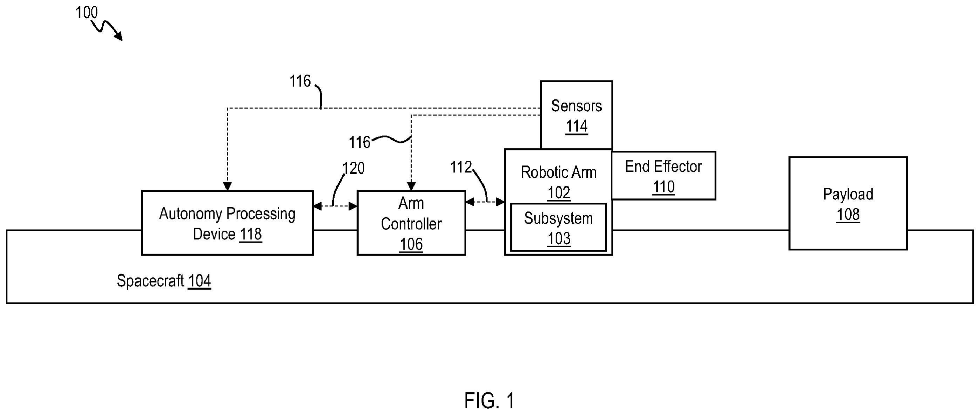

Referring now to Figure 1, shown therein is a system 100 for autonomous health monitoring of a robotic device, according to an embodiment. The system 100 is a space-based robotic system.

The system 100 includes an autonomous machine 102 for performing autonomous robotic functions and operations. The autonomous machine 102 in system 100 is a robotic arm 102. The robotic arm 102 is capable of performing tasks or operations in a fully autonomous manner. The robotic arm 102 is on spacecraft platform 104. The robotic arm 102 may be a serial robotic manipulator. The robotic arm 102 may be a 6-DOF robotic arm. The robotic arm 102 includes a plurality of booms (or links/linkages) and joints for articulating the robotic arm 102. In other embodiments, the robotic arm 102 may be any other type of autonomous machine configured to perform autonomous

The robotic arm 102 includes a plurality of subsystems and components, represented in Figure 1 by subsystem 103. The subsystem 103 may be an arm joint or other component contributing to the functional performance of the robotic arm 102. The subsystem 103 may be a thermal control subsystem (some temperature changes/signatures may suggest or indicate joint failure). The subsystem 103 may be a motor controller. The subsystem 103 has an operational lifetime. The operational lifetime is a period of time during which the subsystem 103 performs at a minimum acceptable level. The operational lifetime may end with failure of the subsystem 103 or degradation of performance to a level that is no longer considered safe or acceptable given mission parameters. The system 100, and in particular autonomous processing device 118 (described below), is configured to monitor and assess the health of the subsystem 103 during its operational lifetime. In some cases, that assessment may take place over a long period of use. This feature of health monitoring provided by system 100 to identify off-nominal behaviour in subsystem 103 that does not rise to the level of a fault but that is suggestive or predictive of future degradation or impacted performance and to implement a response that prolongs the operational lifetime of the subsystem 103 (e.g., by adjusting the manner in which subsystem 103 is used).

The robotic arm 102 is configured to perform one or more autonomous tasks (referred to simply as "tasks") based on instruction from an arm controller 106. Each task is composed of a sequence of robotic actions. In some cases, a task may be composed of only a single action. An example may be a motion type action. In a particular example, the robotic arm 102 is configured to perform a task that includes maneuvering to a payload 108 on spacecraft 104, grappling the payload 108, and then moving the payload to another location on spacecraft 104. In doing so, the robotic arm 102 tracks a trajectory from its original location to a location near the payload 108, executes a payload grapple task, and then tracks a trajectory from the payload location to another location.

The task performed by the robotic arm 102 may include a series or partially ordered sequence of actions (e.g., move from initial location to payload location, grapple payload, move from payload location to a payload destination location).

The robotic arm 102 includes an end effector 110 coupled to a free end of the robotic arm 102. The robotic arm 102 manipulates, moves, and positions the end effector 110. The end effector 110 may be an end effector that can be coupled and decoupled from the end of the robotic arm 102 (i.e., picked up and removed). The end effector 110 is configured to grapple the payload 108 by interfacing with a grapple fixture on the payload 108. The end effector includes active mechanisms (e.g., subsystem 103) that are health monitored.

The system 100 includes a robotic arm controller 106. The arm controller 106 executes control software for controlling movement of the robotic arm 102 (e.g., by controlling joint rate and position of the arm joints). The arm controller 106 may implement a functional layer of the autonomous system including function level control software components. Arm controller 106 may be implemented at a single device or across a plurality of devices. For example, arm controller 106 may be implemented partially at a control device local to the robotic arm 102 and partially at an executive control device configured to determine, plan, and schedule robotic operations. Generally, the arm controller 106 controls movement of arm subsystems (e.g., rotation of the arm joints, movement of the end effector mechanisms), thereby enabling controlled movement of the robotic arm 102 and ultimately of the end effector 110. The robotic arm 102 and arm controller 106 are communicatively connected and the connection is represented as a hashed line 112 between the arm 102 and arm controller 106. Arm controller 106 may include computing components (e.g., processors, data storage) and other control hardware.

The arm controller 106 includes a fault detection software component. The fault detection detects arm-level of functional-level faults based on telemetry (telemetry 116, below).

The system 100 includes a plurality of sensors 114 disposed on and in the environment of the robotic arm 102 for acquiring telemetry data 116 about the execution or robotic tasks by the robotic arm 102. The sensors 114 may be of multiple sensor types. Example sensors include actuator control units, camera controllers, motor controllers, force torque sensors, joint sensors, and arm controllers. Example sensor data 116 that may be collected includes temperature, voltage, current, force, joint rates and joint positions, lidar data, etc. It will be understood that the type and positioning of sensors may vary in different implementations of system 100. The telemetry 116 may include time series numerical and categorical data. The sensors feed sensor data 116 (telemetry, imagery) to the arm controller 106 and the autonomy processing device 118.

In an embodiment, subsystem 103 may have multiple associated telemetry sources that each provide different information about the overall subsystem 103. The telemetry sources may each be thought of as individual subsystem attributes. Examples include motor current of a mechanism, position of a joint, and motor winding temperature information for the mechanism. It is not necessary that each individual subsystem attribute exhibit anomalous behaviour for the subsystem 103 for the predictive algorithm 220 to deem the subsystem 103 to be in an anomalous state. A subset of the subsystem attributes (corresponding to the telemetry 116 sources for the subsystem) may facilitate a nominal or anomalous (off-nominal) designation.

The system 100 includes an autonomy processing device 118. The autonomy processing device 118 may also be referred to as an executive robotic control processor. The autonomy processing device 118 is configured to execute encoded process-executable instructions for monitoring the health and behaviour of the robotic device 102 and its subsystems and components (e.g., joint components, etc.) by analyzing telemetry 116 from sensors 114.

The autonomy processing device 118 is in communication with arm controller 106 via communication link 120. The autonomy processing device 118 may process data received from arm controller 106. Data communicated from autonomy processing device.

The autonomy processing device 118 includes one or more processors for executing software components (or modules) and one or more data storage devices (e.g., memory) for storing data.

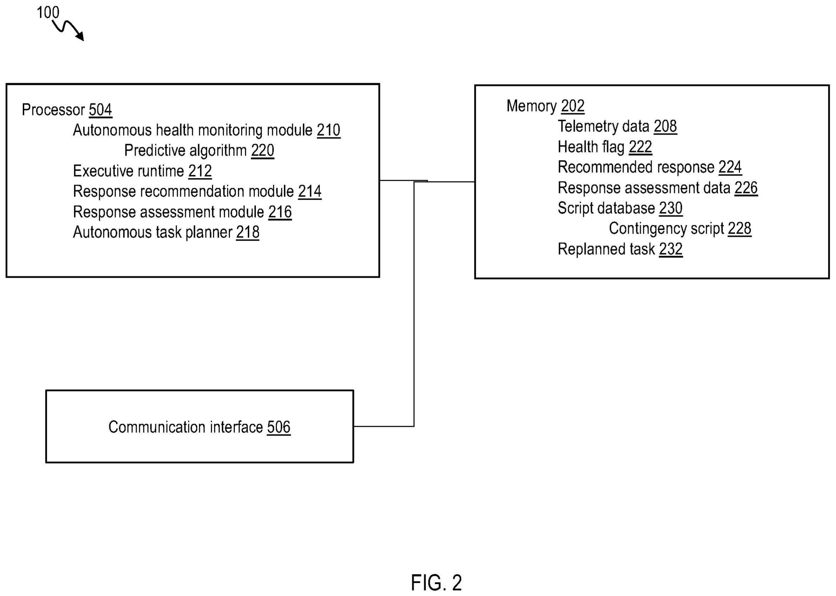

Referring now to Figure 2, shown therein is a computer system 200 for autonomous health monitoring of a robotic system, according to an embodiment. The system 200 may be used to monitor the health of the robotic arm 102 of Figure 1. The system 200 may be implemented at the autonomous processing device 118 of Figure 1.

The system 200 may be configured to implement any one or more of the methods described herein or portions thereof.

The system 200 includes a memory 202 and a processor 204 in communication with the memory 202.

The system 200 includes a communication interface device 206 for transmitting and receiving data to and from other computing devices. The communication interface device 206 may include a network interface device for transmitting and receiving data via a network connection. The network connection may be wired or wireless connection.

The memory 202 stores telemetry data 208. The telemetry data 208 is from sensors 114. The telemetry data 208 includes multiple types of telemetry from multiple sources. The telemetry data 208 is multidimensional. The telemetry 208 was collected during the performance of tasks by the robotic device 102. The tasks may be of different types. The tasks may have been performed over a period of time, such that the telemetry 208 provides information about robotic device 102 performance and behaviour over time (e.g., for trending analysis).

In an example embodiment for assessing joint health, the telemetry 208 includes joint motor currents, actual and commanded point of resolution (POR) rates, joint gearbox twist, POR position and orientation, joint angles, and force moment sensor forces and moments at the POR.

The processor 204 includes an autonomous health monitoring module 210, an executive runtime 212, a response recommendation module 214, a response assessment module 216, and an autonomous task planner module 218. The modules 210-218 may be implemented within executive control software. In some embodiments, the response recommendation module 214 and the response assessment module 216 may be implemented as part of the executive runtime 212.

The autonomous health monitoring module 210 receives the telemetry 208 as input and executes a predictive algorithm (or predictive model) 220. In some cases, the health monitoring module 210 may include a telemetry filter for filtering the telemetry 208. The telemetry 208 may be filtered by any number of properties, including time, type, and related operation. In some cases, the telemetry 208 includes time series data for different sensors 114.

The predictive algorithm 220 is used to detect off-nominal behaviour in the telemetry 208 that is suggestive or predictive or degradation or other faulty behaviour of a subsystem 103 of the robotic arm 102 in the future. Determinations or predictions output by the predictive algorithm 220 may be used to perform autonomous predictive maintenance of the robotic device 102 and its subsystems and components.

In some embodiments, the predictive algorithm 220 may simply detect off-nominal behaviour. In other embodiments, the predictive algorithm 220 may detect off-nominal behaviour and output a lifetime prediction for the subsystem 103 exhibiting the off-nominal behaviour. In some cases, the lifetime prediction may include the predictive algorithm 220 classify predicted lifetime of the subsystem by assigning the detected off-nominal behaviour to one of a plurality of lifetime prediction classes.

In an embodiment, the predictive algorithm 220 may be configured to detect singular off-nominal behaviour events in subsystem 103 and sustained off-nominal behaviour in subsystem 103. Where the predictive algorithm 220 detects a singular off-nominal behaviour event in subsystem 103, the algorithm 220 may not yet have enough information to provide a lifetime prediction. Where the predictive algorithm outputs a lifetime prediction. The lifetime prediction may be, for example, that future operations of a similar nature for the subsystem 103 exhibiting the off-nominal will result in a stall within 'n' future operations. For example, the predictive algorithm 220 may detect sustained off-nominal behaviour in subsystem 103 and output a prediction that future operations of a similar nature for subsystem 103 will result in a stall within 10 future operations.

Unlike fault detection, the predictive algorithm 220 looks at the telemetry 208 and makes its assessment through/over time, such that otherwise non-faulty behaviours in the robotic arm 102 that appear over time are flagged. Fault detection, which may be implemented at the arm/functional level (e.g., at arm controller 106) or at the executive level (e.g., at autonomy processing device 118), is generally not going to detect degradation or off-nominal behaviour because it is not a system-level fault. For example, fault detection may compare telemetry to a threshold and detect a fault when the threshold is exceeded. The fault detection software may not even issue a warning because the off-nominal behaviour is not presently causing a problem in the subsystem or component of the robotic arm 102. In this way, the predictive algorithm 220 is configured to detect off-nominal behaviour that does not trigger a system-level fault or to detect or identify any anomalous (off-nominal) performance that leads to future faults if it goes undetected.

The predictive algorithm 220 may thus be configured to detect or identify any anomalous (off-nominal) performance that leads to future faults if it goes undetected. Off-nominal behaviour or performance in this context, also referred to as an off-nominal health signature, may be defined as a sustained deviation from expected behaviour but that may or may not be distinguishable during a given robotic arm task. For example, consider the following exaggerated scenario: (i) the average motor current for this week's operations was 2.9A; (ii) when these same operations were performed one year ago, the average motor current was 2.6A; (iii) when these same operations were done five years ago, the average motor current was 2.0A. If there is no differences in the nature of the operations during this 5-year time frame, there is a clear increase in the motor input required to achieve mission success for the same missions, When considering the task in isolation (i.e., the telemetry associated with (i), (ii), or (iii) in isolation), and without any telemetry assessment over time (as performed by predictive algorithm 220), the robotic arm 102 may appear to be operating nominally. When the telemetry of (i)-(iii) is considered in the context of a longer time period, the robotic arm 102 is tending towards off-nominal behaviour.

The predictive algorithm 220 determines whether a behaviour of a subsystem 103 of the robotic arm 102 is anomalous (off-nominal) or non-anomalous (nominal) and flags anomalous behaviour. The predictive algorithm 220 advantageously detects anomalies or signatures indicative of future degradation or fault before a serious issue (e.g., failure) of the subsystem presents.

The predictive algorithm 220 is configured to analyze the telemetry 208 and detect a signature of future degradation or failure. The signature, which may be referred to as a health signature, may be multidimensional. In this way, the health monitoring module 210 is predictive (i.e., a future behaviour predictor).

In some cases, the predictive algorithm 220 may detect an off-nominal or faulty health signature and predict a severity of the health issue. In some cases, the predictive algorithm 220 may determine or output a lifetime prediction for the affected component. The lifetime prediction is an estimate of how long the affected subsystem will function before fault. The lifetime prediction may be represented in any way (e.g., time, number of cycles/operations, etc.). In some cases, the lifetime prediction may be categorical. For example, the predictive algorithm 220 may assign the off-nominal health signature to one of multiple classes corresponding to a predicted remaining lifetime.

When the predictive algorithm 220 detects a faulty health signature or off-nominal behaviour, the health monitoring module 210 outputs a health flag 222. The health flag 222 includes data indicating the presence of a faulty health signature. The health flag data 222 may include metadata characterizing the faulty health signature. The health flag 222 includes data identifying the subsystem or component exhibiting the faulty health signature (e.g., via a subsystem/component ID or the like). The health flag 222 may include telemetry 208 associated with the faulty health signature. The health flag 222 may include a command (e.g., pause/abort) and/or a parameterized message regarding the detected off-nominal health signature. The health flag 222 may include data indicating a lifetime prediction or severity of the health signature. The health flag data 222 may include data indicating an operation or task corresponding to the off-nominal health signature. The health flag data 222 may include the particular anomaly or off-nominal data and a severity, class, or category of issue.

In some cases, the predictive algorithm 220 may assign the detected faulty health signature to one of a plurality of classes of fault types. The assigned class may be included in the health flag 222 and used in subsequent processing to determine a response. The plurality of classes may correspond to or indicate relative severities of the off-nominal health signature.

The health flag 222 is output to the executive runtime 212. The executive runtime 212 may coordinate details of the health flag to the recommendation module 214 to develop a set of corrective actions to be supplied to the autonomy processing device 118 to adjust the behaviour of the arm 102.

The executive runtime 212 has the context of the operation and can determine what kind of recovery or preventative action is required for a particular identification (health flag 222). For example, if health flag 222 indicates a joint of the arm 102 is degraded and the degradation is identified to the executive runtime 212 through the health flag 222, the executive runtime 212 may determine and execute a safer action reaching the same goal but not using the degraded joint (e.g., using a different series of joint angles).

In response to the health flag 222, the executive runtime 212 requests a recommended response from the response module 214.

The response module 214 determines a response 224 to the health flag 222. The response 224 adjusts the behaviour or operation of the robotic arm 102, such as by modifying the operating parameters of the affected component (and potentially other, non-affected components). The response 224 may recommend measures that prevent further degradation or worsening of the health situation. Potential responses 224 may include safing the operation, continuing the operation as-is but flagging the issue for future operational consideration, or pausing and taking other recovery measures.

In some cases, the response 224 may include a reallocation of resources in the arm 102. In a particular example, the robotic arm 102 includes three joints and the health flag 222 indicates an off-nominal health signature in one of the joints. The response module 214 may recommend a response 224 that reallocates load to the other joints not exhibiting an off-nominal health signature to prolong the life of the degrading joint or reduce the rate of degradation.

Other example responses 224 may include adjusting operating parameters such as reducing rates (e.g., velocities), limiting joint angles, etc.

In some embodiments, the response recommendation module 214 retrieves a contingency script 228 from a script database 230 stored in memory 202 based on information contained in the health flag 222 and generates a recommended response 224 from the contingency script 228. The contingency script 228 is a set of scripted actions detailing how to respond to the health flag 222 and includes modifications to how at least one type of task is performed by the robotic device 102. Such an approach may be used where responses to off-nominal health signatures are preplanned.

In some embodiments, the response module 214 uses autonomous task planner 218 to autonomously generate a replanned task 232 that achieves the goal of the original task while adjusting an operating parameter of the off-nominal component.

The recommended response 224 is provided to the response assessment module 216.

The response assessment module 216 runs a recommended response assessment algorithm to determine if the recommended response meets certain criteria .

The response assessment module 216 outputs response assessment data 226 to the executive runtime 212 indicating whether the recommended response 224 is approved or rejected. Where rejected, the response recommendation module 214 may inform the executive runtime 212 and the executive runtime determines a next action. The next action may include running the response module 214 again to determine a different response (taking into consideration the rejected response).

Where approved, the executive runtime 212 proceeds to execute the response 224.

In some embodiments, the system 200 includes a training module for training the predictive algorithm 220 according to a machine learning training technique. The training module may be implemented in the ground segment or in the flight segment, with ground being more likely due to availability of processing resources.

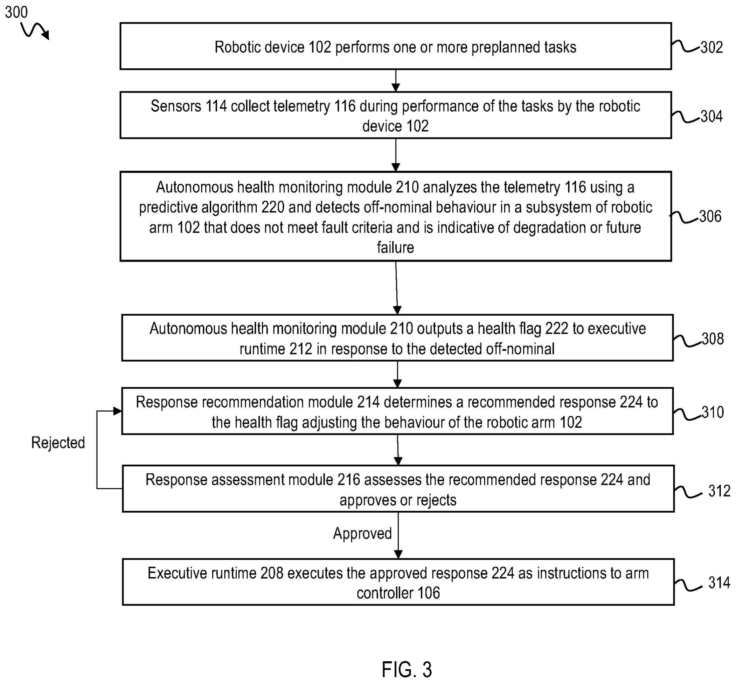

Referring now to Figure 3, shown therein is a method 300 of autonomous health monitoring, according to an embodiment. The method 300 is implemented by the system 100 of Figure 1.

At 302, the robotic device 102 performs one or more preplanned tasks. These tasks may be of the same type or different types. The tasks may be performed over a reasonable length of time. Example tasks may include free space operations and contact operations. Specific examples include grappling a payload, moving a grappled payload, capture of free flyer spacecraft, docking and berthing of visiting vehicles, extravehicular activity (EVA) support, and worksite inspection.

At 304, sensors 114 collect telemetry 116 during performance of the tasks by the robotic device 102.

At 306, autonomous health monitoring module 210 analyzes the telemetry 116 using predictive algorithm 220 and detects off-nominal behaviour in a subsystem of the robotic arm 102, including current off-nominal behaviour and potential off-nominal behaviour. The detected off-nominal behavior includes potential off-nominal, which is behavior that does not meet fault criteria (i.e., would not be categorized/detected through fault detection software). The behaviour is indicative of degradation or future failure in the subsystem. The detected off-nominal behaviour is considered an off-nominal health signature (or faulty health signature).

At 308, autonomous health monitoring module 210 outputs a health flag 222 to the executive runtime 212 in response to the detected off-nominal health signature.

At 310, response recommendation module 214 determines a recommended response 224 to the health flag 222. The response 224 adjusts the behaviour of the robotic arm. The response 224 adjusts an operating parameter of the subsystem exhibiting the off-nominal health signature to slow or stop degradation or prevent worsening of the scenario. This may include, for example, not using the affected subsystem in certain tasks or using the affected subsystem in a limited manner.

At 312, response assessment module 216 assesses the recommended response 224 using a response assessment algorithm and approves or rejects the recommended response 224.

Where the response 224 is rejected, the method 300 returns to 310 and the response recommendation module 214 determines a second recommended response to the health flag 222. The response module 214 has context on the first recommended response in order to avoid recommending the same response again.

Where the response 224 is approved, the method proceeds to 314. At 314, the executive runtime 212 executes the approved response as instructions to the arm controller 106.

Referring again to Figure 2, the predictive algorithm will now be described in further detail, according to embodiment.

The predictive algorithm 220 may use a rule-based system. The rule-based system uses a set of rules defined from relevant prior experience and engineering knowledge to determine whether the subsystem 103 is performing as intended or exhibiting an off-nominal health signature. The rules are defined to capture the nominal behaviour of the subsystem 103 and identify off-nominal features in the telemetry data 208.

The rule-based system may be an expert system. In an embodiment, the expert system assesses three dimensional (3D) telemetry 208 coming from different sensors. The expert system analyzes data sets and data points and determines whether a data set is within a certain region of space representing nominal behaviour. The expert system may flag or otherwise identify data points or data sets that lie outside nominal regions as off-nominal.

The predictive algorithm 220 may be a model-based system. The model-based system is built from fundamental concepts or assumptions and used to identify off-nominal behaviour (anomalies) from nominal behaviour. In variations, the model-based system may use a parity equation, a Kalman filter, a particle filter, or a Bayesian network.

The predictive algorithm 220 may be data-driven system. The data driven system learns a system model from historical telemetry data 116 to predict and validate the system's behaviour.

The predictive algorithm 220 may use a statistical modeling algorithm. The statistical modeling algorithm may be, for example, Multivariate Gaussian, Parzen density estimation, Mixture model approach, or Principal Component Analysis (PCA).

The predictive algorithm 220 may use a machine learning algorithm. The machine learning algorithm may be, for example, a Support Vector Machine, k Nearest Neighbour (kNN), K-Mean, Local Outlier Factor, Regression, or Gaussian Process Regression, or some combination of two or more of the foregoing.

The predictive algorithm 220 may be a deep learning algorithm. The deep learning algorithm may be, for example, an artificial neural network (e.g., a recurrent neural network), an autoencoder, or Long short-term memory (LSTM), or some combination of neural networks, such as a combination of any two or more of the foregoing.

In an embodiment, the health monitoring module 210 runs a trained deep learning model as a first predictive algorithm 220 and an expert system as a second predictive algorithm 220, simultaneously. The combination of a deep learning-trained predictive algorithm along with an expert system predictive algorithm may provide benefits by tying in knowledge about the system constraints from a mechanical standpoint, for example, with system performance via direct telemetry assessments of the multi-dimensional system/sub-system attributes.

While the above description provides examples of one or more apparatus, methods, or systems, it will be appreciated that other apparatus, methods, or systems may be within the scope of the claims as interpreted by one of skill in the art.

## Claims

1. A method of autonomous health monitoring of an autonomous machine, the method comprising:
performing autonomous tasks with the autonomous machine;
using a subsystem of the autonomous machine during performance of the autonomous tasks;
collecting data for a plurality of subsystem attributes during use of the subsystem;
analyzing the data using a predictive algorithm to detect an off-nominal health signature, wherein the off-nominal health signature is based on the data for a subset of the subsystem attributes; and
outputting an off-nominal health flag based on the off-nominal health signature.

2. The method of claim 1, further comprising determining, by a response recommendation module, a set of corrective actions to adjust behaviour of the autonomous machine to mitigate degradation of the subsystem.

3. The method of claim 2, wherein the set of corrective actions includes modifying an operating parameter of the subsystem in a future autonomous task.

4. The method of claim 3, wherein modifying the operating parameter includes using another subsystem instead of the subsystem.

5. The method of claim 2, wherein determining the set of corrective actions includes executing a contingency script comprising a set of scripted actions detailing how to respond to the off-nominal health flag.

6. The method of claim 5, wherein the contingency script is retrieved from a script database based on information contained in the off-nominal health flag.

7. The method of claim 1, further comprising, in response to the off-nominal health flag, using an autonomous task planner to replan a future autonomous task to achieve a same goal with an adjusted operating parameter of the subsystem.

8. The method of claim 1, wherein the off-nominal health flag includes a predicted lifetime for the subsystem.

9. A system for autonomous health monitoring of a autonomous machine, the method comprising:
an autonomous machine configured to perform autonomous tasks, the autonomous machine comprising a subsystem that is operative during performance of the robotic tasks;
a plurality of sensors operative during performance of the robotic tasks to collect data for a plurality of subsystem attributes during use of the subsystem;
a computer system comprising:
a data storage device for storing data including the data; and
one or more processors in communication with the data storage device and configured to:
analyze the data using a predictive algorithm to detect an off-nominal health signature, wherein the off-nominal health signature is based on the data for a subset of the subsystem attributes; and
output an off-nominal health flag based on the off-nominal health signature.

10. The system of claim 9, wherein the one or more processors are configured to determine, by a response recommendation module, a set of corrective actions to adjust behaviour of the autonomous machine to mitigate degradation of the subsystem.

11. The system of claim 10, wherein the set of corrective actions includes modifying an operating parameter of the subsystem in a future autonomous task.

12. The system of claim 11, wherein modifying the operating parameter includes using another subsystem instead of the subsystem.

13. The system of claim 10, wherein determining the set of corrective actions includes executing a contingency script comprising a set of scripted actions detailing how to respond to the off-nominal health flag.

14. The system of claim 13, wherein the contingency script is retrieved from a script database stored in the data storage device based on information contained in the off-nominal health flag.

15. The system of claim 9, wherein the one or more processors is further configured to, in response to the off-nominal health flag, use an autonomous task planner to replan a future autonomous task to achieve a same goal with an adjusted operating parameter of the subsystem.
